# EUROPÄISCHE PATENTSCHRIFT

(11) **EP 0 805 054 B1**
(45) Veröffentlichungstag und Bekanntmachung des Hinweises auf die Patenterteilung: **17.05.2000**
(21) Anmeldenummer: 97107124.6
(22) Anmeldetag: 30.04.1997
(51) Int. Cl.: B60D 5/00, B61D 17/22

(54) **Einrichtung zur Stabilisierung des Mittelrahmens eines Balges eines Überganges zwischen zwei gelenkig miteinander verbundenen Fahrzeugteilen eines Gelenkfahrzeugs**
Lock rail stability device for a gangway bellow between two hinged vehicle parts of an articulated vehicle
Dispositif pour la stabilisation de la traverse moyenne entre les deux parties reliées d'un véhicule articulé

(30) Priorität: 03.05.1996 DE 19617903; 31.05.1996 DE 19621915
(43) Veröffentlichungstag der Anmeldung: 05.11.1997
(73) Patentinhaber: HÜBNER Gummi- und Kunststoff GmbH, D-34123 Kassel (DE)
(72) Erfinder: Koch, Robert, 37242 Bad Sooden-Allendorf (DE)
(74) Vertreter: Walther, Robert, Dipl.-Ing.

(56) Entgegenhaltungen:
- EP-A- 0 648 663
- DE-A- 2 748 714
- DE-B- 1 207 220
- DE-C- 966 302
- GB-A- 2 139 582
- US-A- 4 903 612

## Beschreibung

Die Erfindung betrifft eine Einrichtung zur Stabilisierung des Mittelrahmens eines Balges eines Überganges zwischen zwei gelenkig miteinander verbundenen Fahrzeugteilen eines Gelenkfahrzeugs, wobei der Balg jeweils endseitig an einem Fahrzeugteil angelenkt ist.

Ein Übergang zwischen zwei gelenkig miteinander verbundenen Fahrzeugteilen eines Fahrzeugs ist bekannt; hierbei besteht der Übergang üblicherweise aus einer Übergangsbrücke, die von einem Falten- oder Wellenbalg überspannt wird. Der Mittelrahmen teilt den Balg in zwei Hälften. Die beiden Fahrzeugteile sind darüberhinaus durch ein Gelenk miteinander verbunden, wobei sich Teile des Übergangs auf diesem Gelenk abstützen.

Bekannt ist zur Stabilisierung des Mittelrahmens über dem Balg entsprechende Vorrichtungen in Form von längenveränderlichen Dämpfern vorzusehen, die den Mittelrahmen in einer Lage etwa mittig zwischen den beiden Fahrzeugteilen halten. Diese Vorrichtungen sind aufgrund der teleskopartigen Ausbildung relativ teuer und auch wartungsanfällig, wenn man bedenkt, daß sie der Witterung ausgesetzt sind (s. z.B. die gattungsgemässe EP-A- 0 648 663).

Der Erfindung liegt daher die Aufgabe zugrunde, eine Einrichtung der eingangs genannten Art bereitzustellen, die einfacher und damit preiswerter in der Herstellung ist.

Eine derartige Einrichtung zeichnet sich erfindungsgemäß dadurch aus, daß der Mittelrahmen im Dachbereich mindestens einen Schlitten aufweist, wobei der Schlitten quer zur Längsachse des Fahrzeugs im Mittelrahmen beweglich gelagert ist, und wobei der Schlitten durch mindestens ein Führungsglied an mindestens einem Fahrzeugteil anlenkbar ist. Hierdurch ist gewährleistet, daß der Schlitten im Mittelrahmen zwangsgeführt ist. Dies bewirkt, daß der Mittelrahmen unabängig von den Bewegungen der beiden Fahrzeugteile relativ zu einander immer eine Mittellage zwischen den beiden Balgteilen einnimmt. Vorzugsweise ist jedoch der Schlitten mit jedem Fahrzeugteil durch ein Führungsglied verbunden, wobei das Führungsglied vorteilhaft als Stange ausgebildet ist, die sowohl am Fahrzeugteil als auch am Schlitten gelenkig angeordnet ist. Der Schlitten ist hierbei außermittig zur Fahrzeugmittellängsachse in der Führungsschiene geführt; das als Stange ausgebildete Führungsglied ist in der Mittellängsachse des Fahrzeugs am Fahrzeug befestigt.

Eine besonders ausgeprägte Stabilisierung des Mittelrahmens findet dann statt, wenn die Führungsschiene zwei Schlitten aufweist, die jeweils außerhalb der Mittelachse des Fahrzeugs in der Führungsschiene angeordnet sind, und wenn jeder Schlitten durch jeweils zwei Führungsglieder mit den beiden Fahrzeugteilen verbindbar ist. Eine derartige Konstruktion ist insbesondere dann von Vorteil, wenn im Bereich des Mittelrahmens im Übergang Haltestangen angeordnet werden sollen, und wenn der Mittelrahmen durch keine weiteren Abstützungen in seiner Lage stabilisiert ist. Bei einer derartigen freien Aufhängung des Mittelrahmens bestand nach dem Stand der Technik die Möglichkeit, daß durch Vandalismus oder unachtsame Fahrgäste der Mittelrahmen aus seiner Position gebracht wird, und dieser durch Handkraft zum Schwingen gebracht wird, was auf Dauer eine Zerstörung des Faltenbalges zur Folge hat. Durch die Anordnung von zwei Schlitten in der Führungsschiene jedoch, wobei jeder der Schlitten durch ein Führungsglied mit jedem Fahrzeugteil verbunden ist, wird erreicht, daß auf jede weitere Stabilisierung des Mittelrahmens auch bei Anordnung von Haltestangen am Mittelrahmen verzichtet werden kann.

Es hat sich herausgestellt, beispielsweise bei Niederflurbussen, daß die absolute Bauhöhe der Busse beibehalten wird, jedoch die Flurhöhe nach unten abgesenkt wird. Dies bedeutet, daß die freie Durchgangshöhe in einem derartigen Niederflurbus mehr als das normal notwendige Maß beträgt. Infolgedessen steht im Dachbereich innerhalb des Balges genügend Raum für die Anordnung von Schlitten im Mittelrahmen zwischen den beiden Fahrzeugteilen eines Gelenkfahrzeuges zur Verfügung.

Im einzelnen ist vorgesehen, daß die vertikal verlaufenden Streben des Mittelrahmens durch eine Führungsschiene für den Schlitten verbunden sind. Daraus wird deutlich, daß der Dachbereich im Bereich des Überganges eines derartigen Fahrzeugs abgehängt wird, wodurch eine zusätzliche Schall- und Klimaisolierung im Dach des Faltenbalges ermöglicht wird. Weiterhin wird hieraus deutlich, daß die Führung des Schlittens bzw. der Schlitten im Mittelrahmen im Inneren des Balges, also vor Witterungseinflüssen geschützt, erfolgt.

Um eine gute Führung des bzw. der Schlitten in der Führungsschiene zu gewährleisten, ist vorgesehen, daß die Führungsschiene den Schlitten formschlüssig aber längs der Führungsschiene verschieblich aufnimmt.

In einer bevorzugten Ausführungsform zeigt das Führungsglied ein Gelenk. Es hat sich herausgestellt, daß bei extremen Kurvenfahrten der Weg des Schlittens im Mittelrahmen bzw. in der Führungsschiene nicht ausreichend ist, um ohne Beschädigung der Führungsglieder derartige enge Kurven durchfahren zu können. Durch die Anordnung eines Gelenkes in dem Führungsglied besteht nunmehr in diesem Fall die Möglichkeit des Einknickens des Führungsgliedes in Richtung auf die Führungsschiene zu. Um zu verhindern, daß das Führungsglied nach außen um einen überstreckten Winkel von über 180° einknickt, weist das Gelenk einen entsprechenden Anschlag auf. Weiterhin ist vorgesehen, daß im Bereich des Gelenkes ein Rückholglied angeordnet ist, das am Mittelrahmen und hier insbesondere an der Führungsschiene angeordnet ist. Dieses Rückholglied, das vorzugsweise in der Mittellängsachse des Fahrzeug an der Führungsschiene befestigbar ist, sorgt dafür, daß vor dem Einknickvorgang das Gelenk aus der Totpunktlage, also einem Winkel von 180° oder mehr in die Einknickposition gezogen wird, also einen Winkel von kleiner als 180°. Zur genaueren Justierung des Gelenkes ist vorgesehen, daß das Rückholglied in seiner Länge einstellbar ist. D. h. daß durch die Einstellbarkeit der Länge des Rückholgliedes, das drehbar am Mittelrahmen bzw. an der Führungsschiene befestigt ist, der Zeitpunkt des Einknickvorganges bestimmt werden kann.

Anhand der Zeichnung wird die Erfindung nachstehend beispielhaft näher erläutert.
- Fig. 1: zeigt schematisch die erste Ausführungsform der Einrichtung zur Stabilisierung des Mittelrahmens in perspektivischer Darstellung;
- Fig. 2: zeigt einen Schnitt durch die Führungsschiene mit Schlitten;
- Fig. 3: zeigt eine zweite Ausführungsform gemäß Fig. 1;
- Fig. 4: zeigt die Führungsschiene mit den Führungsgliedern in perspektivischer Darstellung;
- Fig. 5: zeigt einen Schnitt gemäß der Linie VI - VI aus Fig. 4;
- Fig. 6: zeigt die Stellung der Führungsschiene und der Führungsglieder bzw. Kurvenfahrt;

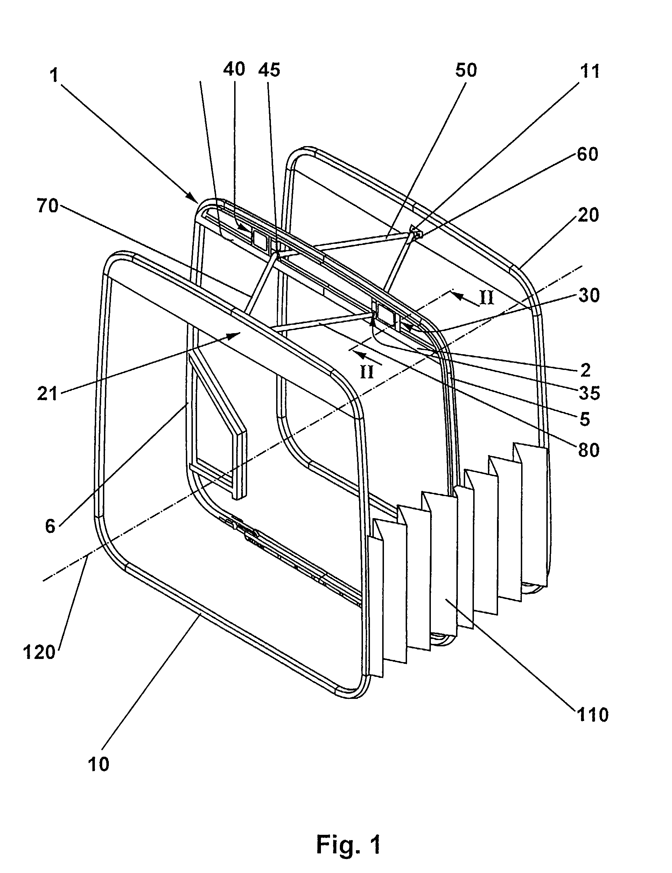

Gemäß Figur 1 ist der Mittelrahmen insgesamt mit 1 bezeichnet. Der Mittelrahmen 1 ist Bestandteil eines Falten- oder Wellenbalges 110, der an dem Rahmen 10 und 20 der Fahrzeugstirnseite befestigt ist und der den Mittelrahmen überspannt; das heißt, die Rahmen 10 und 20 bilden jeweils die Endrahmen der entsprechenden Fahrzeugteilen des Gelenkfahrzeuges. Die Fahrzeugteile des Gelenkfahrzeuges sind ebenfalls nicht dargestellt. Die eigentliche Einrichtung zur Stabilisierung des Mittelrahmens befindet sich innerhalb des Balges. Hierbei weist der Mittelrahmen 1 im Dachbereich unterhalb des Balges eine mit 2 bezeichnete Führungsschiene auf. Diese Führungsschiene verbindet die beiden vertikalen Streben 5 und 6 des Mittelrahmens 1. Die Führungsschiene 2 nimmt zwei Schlitten 30, 40 parallel zur Längsachse der Führungsschiene verschieblich auf. Diese beiden Schlitten 30, 40 sind jeweils mit als Führungsgliedern ausgebildeten Stangen 50, 60 bzw. 70, 80 mit den Endrahmen 10, 20 und somit mit den entsprechenden Fahrzeugteilen verbunden. Die Verbindung erfolgt hierbei jeweils durch Drehgelenke, wobei das Drehgelenk am Endrahmen 10, 20 mit 11, 21 und das Drehgelenk am Schlitten mit 35, 45 bezeichnet ist. Die Drehung erfolgt um jeweils eine vertikale Achse. Wesentlich hierbei ist, daß die Schlitten 30, 40 außerhalb der Mittellängsachse 120 des Fahrzeugs in dem Mittelrahmen angeordnet sind, jedoch die Stangen 50 - 80 in der Mittellängsachse des Fahrzeugs angelenkt sind. Durch die gelenkige Anlenkung der Stangen an den Endrahmen 10, 20 einerseits und an den Schlitten 30, 40 andererseits wird bewirkt, daß die Schlitten 30, 40 schlußendlich entlang der Führungsschiene 2 verschoben werden können, wenn die zwischen den beiden Fahrzeugteilen aufgetretenen Fahrbewegungen dies erfordern. Hervorzuheben hierbei ist, daß durch die Anordnung der Stangen, die nicht verlängerbar sind und die Anordnung bzw. Plazierung der Schlitten in der Führungsschiene, die Schlitten niemals in den Bereich der Mittellängsachse 120 des Fahrzeugs gelangen können. Die Schlitten verbleiben immer außermittig der Mittellängsachse des Fahrzeugs. Gleiches gilt sinngemäß für die Anordnung eines einzigen Schlittens in der Führungsschiene.

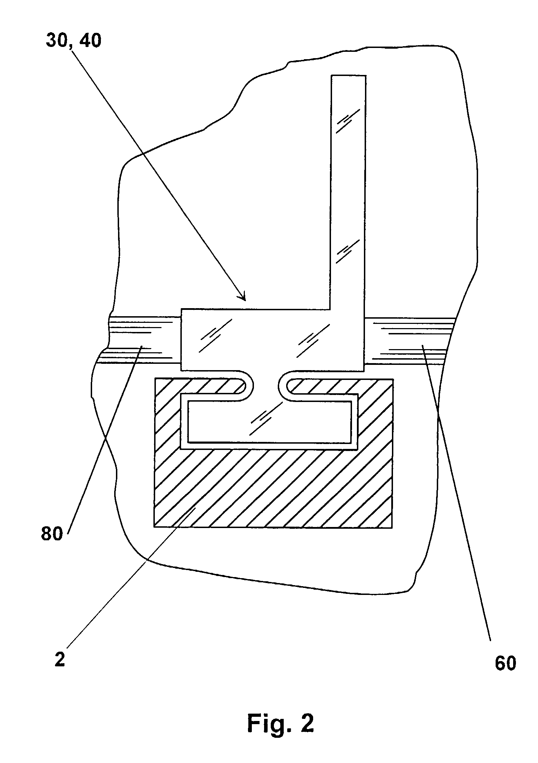

Aus Figur 2 ergibt sich die Ausbildung der Führungsschiene zur Aufnahme der Schlitten. So ist aus Figur 2 erkennbar, daß der Schlitten 30, 40 durch eine Art Schwalbenschwanzführung in der Führungsschiene 2 verschieblich gelagert ist.

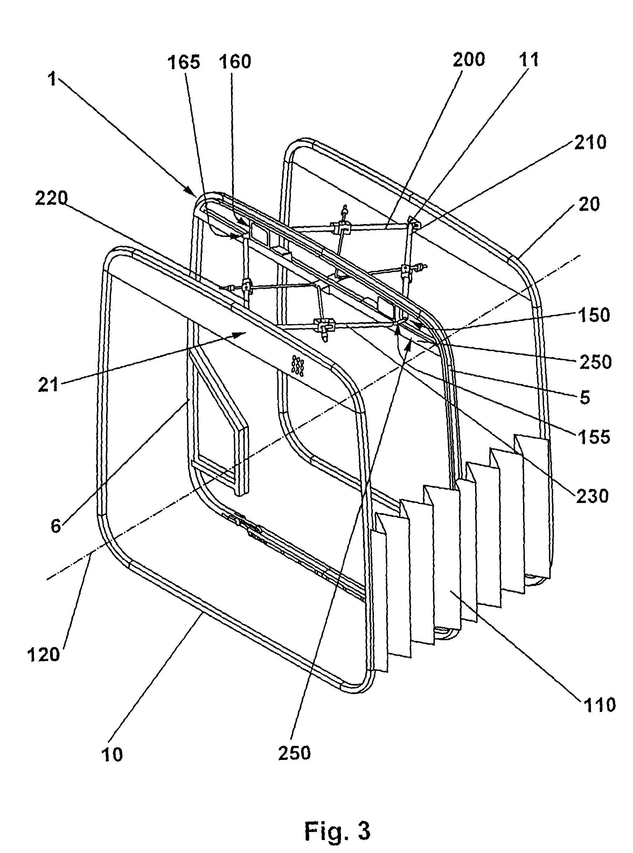

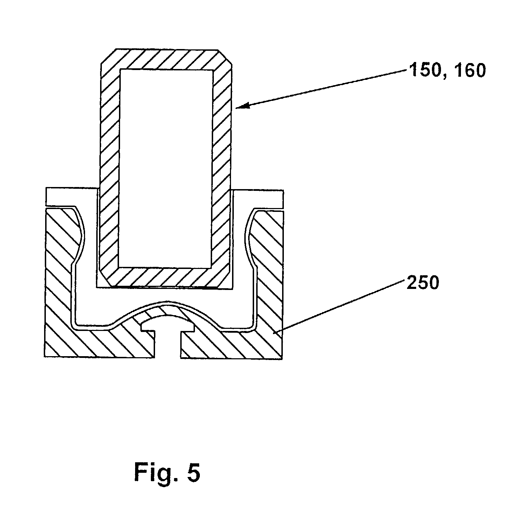

Die zweite Ausführungsform einer Mittelrahmenstabilisierung ergibt sich aus den Figuren 3 bis 6. Hierbei sind gemäß Figur 3 in der mit 250 bezeichneten Führungsschiene die Schlitten 150 und 160 verschieblich geführt, wobei diese Schlitten 150, 160 ähnlich der Ausführungsform gemäß den Figuren 1 und 2 gelenkig angelenkte Führungsglieder 200, 210, 220, 230 aufweisen. Diese Führungsglieder 200 bis 230 sind nicht nur gelenkig an den Schlitten 150, 160 bei 155, 165 angelenkt, sondern ebenfalls gelenkig an dem jeweiligen Fahrzeugteil 10, 20 bei 11, 21. Insoweit ist die konstruktive Ausgestaltung identisch mit der Ausführungsform gemäß den Fig. 1 und 2. Ein Unterschied besteht allerdings darin, daß jedes dieser Führungsglieder 200 bis 230 ein Gelenk 201, 211, 221, 231 zeigt. Ein jedes dieser Gelenke besitzt einen Anschlag 202, 212, 222, 232; der Anschlag ist hierbei derart gestaltet, daß das Gelenk im Bereich der Teilung in die beiden Gelenkkörper 201a, 201b bzw. 211a, 211b bzw. 221a, 221b bzw. 231a, 231b eine Schräge 205 bis 235 aufweist, die im gestreckten Zustand des Gelenkes, d. h. in dem Zustand, in dem die beiden Teile des Führungsgliedes in einem Winkel von etwa 180° zueinander stehen, aneinander anliegen. Um zu gewährleisten, daß bei entsprechender Kurvenfahrt ein Einknicken der Führungsglieder 200, 210, 220, 230 erfolgt, sind Rückholglieder 203, 213, 223, 233 vorgesehen. Die Wirkungsweise dieser Rückholglieder wird besonders deutlich aus Fig. 5, in der in gestrichelter Darstellung die Führungsschiene 250 und entsprechend die Führungsglieder bei Kurvenfahrt dargestellt sind. Die Darstellung gemäß den durch durchgezogenen Linien zeigt die Ausgangsstellung. Insbesondere wird aus dieser Darstellung gemäß Fig. 5 deutlich, daß die Rückholglieder 203, 213, 223, 233 dazu dienen, das jeweilige Führungsglied aus der Totpunktlage in die Einknicklage zu überführen. Hierzu ist jedes dieser Rückholglieder ebenfalls gelenkig an der Führungsschiene 250 gelagert. Vorteilhaft ist ein jedes Rückholglied in der Länge verstellbar; dies wird im vorliegenden Fall dadurch bewerkstelligt, daß das jeweilige Rückholglied endseitig ein Gewinde aufweist, wobei das Gewinde eine Schraube aufnimmt, und wobei somit durch die Schraube der Weg vorbestimmbar ist, bei dem das Rückholglied an das Gelenk anstößt und dieses zum Einknicken bewegt.

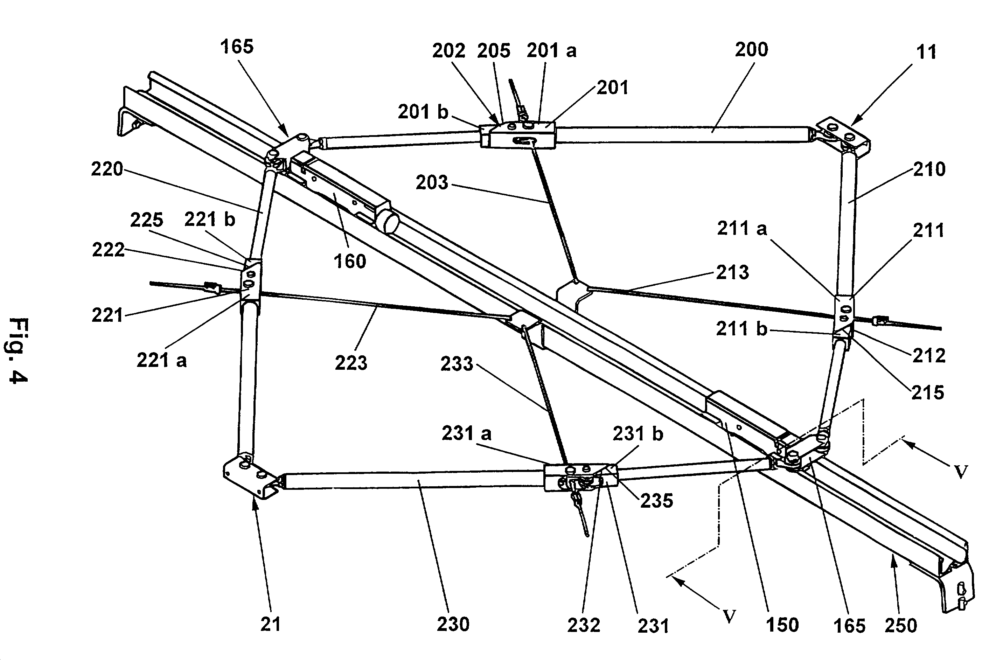

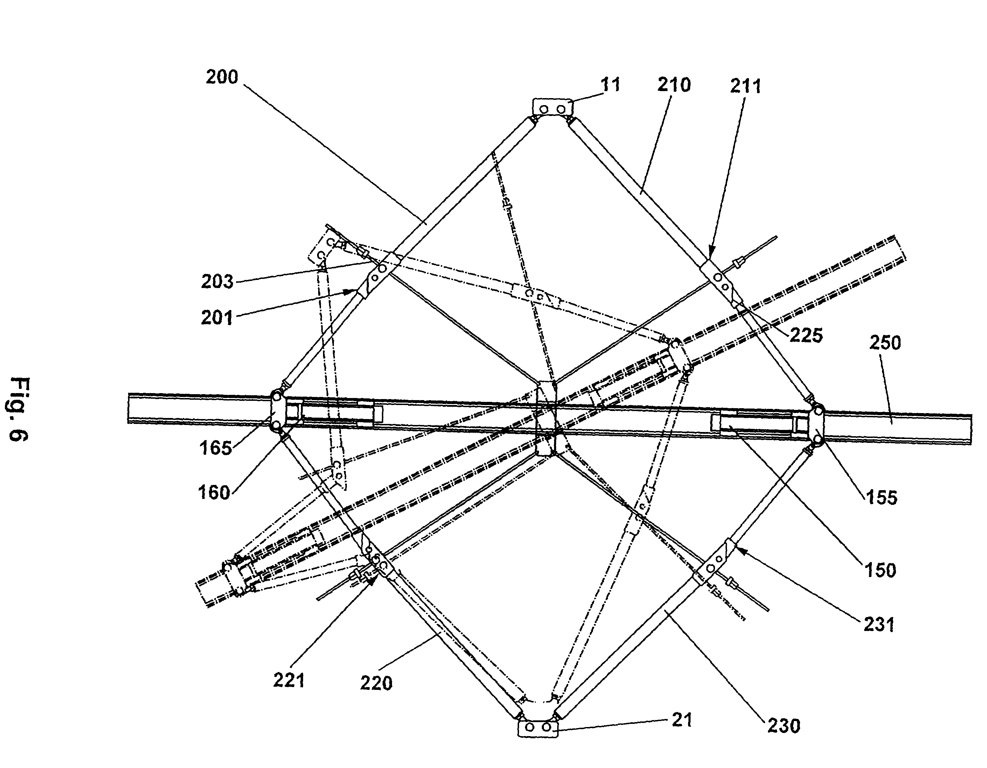

Bei der Darstellung gemäß Fig. 6 handelt es sich um einen Schnitt gemäß der Linie VI - VI aus Fig. 4. Hieraus wird deutlich, ebenso wie aus Fig. 2 der ersten Ausführungsform, daß der Schlitten 150, 160 durch eine Art Schwalbenschwanzführung in der Führungsschiene 250 verschieblich gelagert ist.

## Patentansprüche

1. Einrichtung zur Stabilisierung des Mittelrahmens eines Balges eines Übergangs zwischen zwei gelenkig miteinander verbundenen Fahrzeugteilen eines Gelenkfahrzeuges, wobei der Balg jeweils endseitig an einem Fahrzeugteil angelenkt ist,
**dadurch gekennzeichnet**,
daß der Mittelrahmen (1) im Dachbereich mindestens einen Schlitten (30, 40; 150; 160) aufweist, wobei der Schlitten (30, 40; 150; 160) quer zur Längsachse des Fahrzeugs im Mittelrahmen (1) beweglich gelagert ist, wobei der Schlitten (30, 40; 150; 160) durch mindestens ein Führungsglied (50, 60; 170, 80; 200, 210; 220, 230) an mindestens einem Fahrzeugteil (10, 20) anlenkbar ist.

2. Einrichtung nach Anspruch 1,
**dadurch gekennzeichnet,**
daß die vertikal verlaufenden Streben (5, 6) des Mittelrahmens (1) durch eine Führungsschiene (2, 250) für den Schlitten (30, 40, 150, 160) verbunden sind.

3. Einrichtung nach einem der voranstehenden Ansprüche,
**dadurch gekennzeichnet**,
daß der Schlitten (30, 40, 150, 160) außerhalb der Mittellängsachse des Fahrzeugs in der Führungsschiene (2, 250) geführt ist.

4. Einrichtung nach Anspruch 1,
**dadurch gekennzeichnet**,
daß das Führungsglied (50, 60, 70, 80; 200, 210, 220, 230) eine Stange ist, die sowohl am Fahrzeugteil als auch am Schlitten (30, 40, 150, 160) gelenkig angeordnet ist.

5. Einrichtung nch einem der voranstehenden Ansprüche,
**dadurch gekennzeichnet**,
daß die Führungsschiene (2, 250) zwei Schlitten (30, 40, 150, 160) aufweist, die außerhalb der Mittellängsachse des Fahrzeugs in der Führungsschiene (2, 250) angeordnet sind.

6. Einrichtung nach Anspruch 5,
**dadurch gekennzeichnet**,
daß jeder Schlitten (30, 40; 150, 160) durch jeweils ein Führungsglied (50, 70, 60, 80; 200, 210, 220, 230)mit jeweils einem Fahrzeugteil verbindbar ist.

7. Einrichtung nach einem der voranstehenden Ansprüche,
**dadurch gekennzeichnet**,
daß die Anlenkung des bzw. der Führungsglieder (50 bis 80; 200 bis 230) am Fahrzeugteil in der Mittellängsachse (120) des Fahrzeugs erfolgt.

8. Einrichtung nach einem der voranstehenden Ansprüche,
**dadurch gekennzeichnet**,
daß die Führungsschiene (2; 250) den Schlitten (30, 40; 150, 160) formschlüssig aber längs der Führungsschiene (2; 250) verschieblich aufnimmt.

9. Einrichtung nach einem der voranstehenden Ansprüche,
**dadurch gekennzeichnet**,
daß das Führungsglied (200, 210, 220, 230) ein Gelenk (201, 211, 221, 231) aufweist.

10. Einrichtung nach einem der voranstehenden Ansprüche,
**dadurch gekennzeichnet**,
daß das Gelenk (201, 211, 221, 231) nach einen innen, d. h. in Richtung auf die Führungsschiene abknickbar ist.

11. Einrichtung nach einem der voranstehenden Ansprüche,
**dadurch gekennzeichnet**,
daß das Gelenk (201, 211, 221, 231) einen Anschlag (202, 212, 222, 232) aufweist, um ein Abknicken nach außen um einen Winkel größer als 180° zu verhindern.

12. Einrichtung nach einem der voranstehenden Ansprüche,
**dadurch gekennzeichnet**,
daß im Bereich des Gelenkes (201, 211, 221, 231) ein Rückholglied (203, 213, 223, 233) angeordnet ist, das am Mittelrahmen (1) drehbar befestigbar ist.

13. Einrichtung nach Anspruch 13,
**dadurch gekennzeichnet**,
daß das Rückholglied (203, 213, 223, 233) an der Führungsschiene (250) angeordnet ist.

14. Einrichtung nach Anspruch 12,
**dadurch gekennzeichnet**,
daß das Rückholglied (203, 213, 223, 233) in der Mittellängsachse (120) an der Führungsschiene (250) angeordnet ist.

15. Einrichtung nach einem der voranstehenden Ansprüche,
**dadurch gekennzeichnet**,
daß das Rückholglied (203, 213, 223, 233) in seiner Länge einstellbar ist.

## Claims

1. Central frame stability device for a gangway bellows between two hinged vehicle parts of an articulated vehicle, the bellows being hinged on either end to a vehicle part,
**characterized in that** the central frame (1) located in the ceiling area is provided with at least one cradle (30, 40; 150; 160), whereas the cradle (30, 40; 150; 160) is movably arranged in the central frame (1) transversely to the longitudinal axis of the vehicle and whereas the cradle (30, 40; 150; 160) may be hinged to at least one vehicle part (10, 20) by at least one guiding member (50, 60; 70, 80; 200, 210; 220, 230).

2. Device according to claim 1,
**characterized in that** the vertically running braces (5, 6) of the central frame (1) are interconnected by a guiding rail (2, 250) for the cradle (30, 40, 150, 160).

3. Device according to one of the previous claims,
**characterized in that** the cradle (30, 40, 150, 160) is guided in the guiding rail (2, 250) exterior to the central longitudinal axis of the vehicle.

4. Device according to claim 1,
**characterized in that** the guiding member (50, 60, 70, 80; 200, 210, 220, 230) is advantageously designed as a rod, which is hinged to the vehicle part as well as to the cradle (30, 40, 150, 160).

5. Device according to one of the previous claims,
**characterized in that** the guiding rail (2, 250) is provided with two cradles (30, 40, 150, 160) being arranged exterior to the central longitudinal axis of the vehicle in the guiding rail (2, 250).

6. Device according to claim 5,
**characterized in that** each cradle (30, 40; 150, 160) is linkable to one vehicle part each by means of one guiding member (50, 60, 70, 80; 200, 210, 220, 230) per cradle.

7. Device according to one of the previous claims,
**characterized in that** the linking of the guiding member or members (50 through 80; 200 through 230) to the vehicle part takes place in the central longitudinal axis (120) of the vehicle.

8. Device according to one of the previous claims,
**characterized in that** the guiding rail (2; 250) receives the cradle (30, 40; 150, 160) form-fittingly but movably along the guiding rail (2; 250).

9. Device according to one of the previous claims,
**characterized in that** the guiding member (200, 210, 220, 230) is provided with a joint (201, 211, 221, 231).

10. Device according to one of the previous claims,
**characterized in that** the joint (201, 211, 221, 231) can be buckled inwards, i.e. towards the guiding rail.

11. Device according to one of the previous claims,
**characterized in that,** in order to avoid outward buckling by an overstretched angle of more than 180°, the joint (201, 211, 221, 231) is provided with a corresponding stopper (202, 212, 222, 232).

12. Device according to one of the previous claims,
**characterized in that** a recuperating member (203, 213, 223, 233) is arranged within the area of the joint (201, 211, 221, 231) which is pivotably fastenable on the central frame (1).

13. Device according to claim 12,
**characterized in that** the recuperating member (203, 213, 223, 233) is arranged on the guiding rail (250).

14. Device according to claim 12,
**characterized in that** the recuperating member (203, 213, 223, 233) is arranged on the guiding rail (250) in the central longitudinal axis (120).

15. Device according to one of the previous claims,
**characterized in that** the length of the recuperating member (203, 213, 223, 233) is adjustable.

## Revendications

1. Dispositif pour la stabilisation du cadre central d'un soufflet d'un couloir de communication entre les deux parties reliées d'un véhicule articulé, le soufflet étant articulé par chacune de ses extrémités à une partie de véhicule,
**caractérisé en ce que** le cadre central (1) situé dans le plafond est pourvu d'au moins un chariot (30, 40; 150; 160), ledit chariot (30, 40; 150; 160) étant placé de façon mobile transversalement à l'axe longitudinal du véhicule dans le cadre central (1) et pouvant être articulé à au moins une partie de véhicule (10, 20) par au moins un membre de guidage (50, 60; 70, 80; 200, 210; 220, 230).

2. Dispositif selon la revendication 1,
**caractérisé en ce que** les traverses verticales (5, 6) du cadre central (1) sont reliées par un rail de guidage (2, 250) pour le chariot (30, 40; 150, 160).

3. Dispositif selon l'une des revendications précédentes,
**caractérisé en ce que** le chariot (30, 40, 150, 160) est guidé dans le rail de guidage (2, 250) en dehors de l'axe longitudinal central du véhicule.

4. Dispositif selon la revendication 1,
**caractérisé en ce que** le membre de guidage (50, 60, 70, 80; 200, 210, 220, 230) est conçu comme une barre articulée aussi bien à la partie de véhicule qu'au chariot (30, 40; 150, 160).

5. Dispositif selon l'une des revendications précédentes,
**caractérisé en ce que** le rail de guidage (2, 250) est pourvu de deux chariots (30, 40; 150, 160) placés en dehors de l'axe longitudinal central du véhicule dans le rail de guidage (2, 250).

6. Dispositif selon la revendication 5,
**caractérisé en ce que** chaque chariot (30, 40; 150, 160) peut être relié par un membre de guidage (50, 60, 70, 80; 200, 210, 220, 230) à une partie de véhicule.

7. Dispositif selon l'une des revendications précédentes,
**caractérisé en ce que** l'articulation du, voire des membres de guidage (50 à 80; 200 à 230) au véhicule se fait dans l'axe longitudinal central (120) du véhicule.

8. Dispositif selon l'une des revendications précédentes,
**caractérisé en ce que** le rail de guidage (2; 250) reçoit le chariot (30, 40; 150, 160) de façon à ce qu'il épouse sa forme mais qu'il soit mobile le long du rail de guidage (2; 250).

9. Dispositif selon l'une des revendications précédentes,
**caractérisé en ce que** le membre de guidage (200, 210, 220, 230) est pourvu d'une articulation (201, 211, 221, 231).

10. Dispositif selon l'une des revendications précédentes,
**caractérisé en ce que** l'articulation (201, 211, 221, 231) peut être déplacée angulairement vers l'intérieur, c.à.d. en direction du rail de guidage.

11. Dispositif selon l'une des revendications précédentes,
**caractérisé en ce que** l'articulation (201, 211, 221, 231) a été pourvue d'une butée (202, 212, 222, 232) afin d'éviter un déplacement angulaire vers l'extérieur selon un angle supérieur à 180°.

12. Dispositif selon l'une des revendications précédentes,
**caractérisé en ce que** un membre récupérateur (203, 213, 223, 233) est placé dans la région de l'articulation (201, 211, 221, 231) de façon à être pivotablement attachable au cadre central (1).

13. Dispositif selon la revendication 12,
**caractérisé en ce que** le membre récupérateur (203, 213, 223, 233) est placé de façon pivotable sur le rail de guidage (250).

14. Dispositif selon la revendication 12,
**caractérisé en ce que** le membre récupérateur (203, 213, 223, 233) est placé sur le rail de guidage (250) dans l'axe longitudinal central (120).

15. Dispositif selon l'une des revendications précédentes,
**caractérisé en ce que** la longueur du membre récupérateur (203, 213, 223, 233) est ajustable.
